(19) Europäisches Patentamt

European Patent Office

Office européen des brevets

(11) **EP 2 655 123 B1**

(12) **FASCICULE DE BREVET EUROPEEN**

(45) Date de publication et mention de la délivrance du brevet:
**08.04.2015 Bulletin 2015/15**

(21) Numéro de dépôt: **11815494.7**

(22) Date de dépôt: **21.12.2011**

(51) Int Cl.:
***H02J 7/14*** **(2006.01)**

(86) Numéro de dépôt international:
**PCT/FR2011/053122**

(87) Numéro de publication internationale:
**WO 2012/085458 (28.06.2012 Gazette 2012/26)**

(54) **DISPOSITIF ET PROCEDE DE CONVERSION DC/DC DANS LE RESEAU DE BORD D'UN VEHICULE**

VORRICHTUNG UND VERFAHREN ZUR GLEICHSTROMWANDLUNG IM BORDNETZ EINES KRAFTFAHRZEUGES

DEVICE AND METHOD OF DC/DC CONVERSION IN THE ON BOARD NETWORK OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1061142**

(43) Date de publication de la demande:
**30.10.2013 Bulletin 2013/44**

(73) Titulaire: **Valeo Systèmes de Contrôle Moteur 95800 Cergy (FR)**

(72) Inventeurs:
• **BATTELIER, Aurélien F-95300 Pontoise (FR)**
• **TEUW, Mamadou-Fall F-95300 Pontoise (FR)**

(56) Documents cités:
**US-A1- 2010 009 219      US-A1- 2010 019 569
US-A1- 2010 070 121**

**Description**

**DOMAINE TECHNIQUE**

L'invention concerne un dispositif et un procédé de conversion DC/DC dans le réseau de bord d'un véhicule, par exemple une automobile.

**ÉTAT DE LA TECHNIQUE ANTÉRIEURE**

On connaît un ensemble de solutions faciles à mettre en oeuvre et pouvant être rapidement introduites sur le marché pour les différentes étapes de l'hybridation de véhicules. De telles solutions permettent une réduction significative de la consommation et des émissions de $CO_2$.

Il existe deux solutions « Stop-Start » (ou « arrêt-marche ») complémentaires, à partir soit d'un démarreur renforcé soit d'un alterno-démarreur. La fonction « Stop-Start » coupe le moteur lors de l'arrêt du véhicule et le relance ensuite instantanément et sans bruit. Le démarreur renforcé permet de réaliser la fonction « Stop-Start » avec une réduction de la consommation de 4 à 6% sur cycle européen NEDC (« New European Driving Cycle »). Du fait de la non-intrusivité du système sur l'architecture du véhicule, celui-ci peut être installé dans de très brefs délais. La fonction Stop-Start réalisée à partir d'un alterno-démarreur offre différents niveaux d'hybridation et, par conséquent, des gains en consommation et des réductions d'émissions. Cet alterno-démarreur permet d'obtenir un rendement amélioré puisqu'il coupe le moteur dès que le véhicule roule en-dessous d'une certaine vitesse, la consommation pouvant être réduite de 6 à 8% en cycle européen NEDC et jusqu'à 25% en circulation urbaine chargée, là où les véhicules passent 35% de leur temps à l'arrêt. Installé en lieu et place d'un alternateur classique, cet alterno-démarreur nécessite peu de modifications sur l'architecture du véhicule.

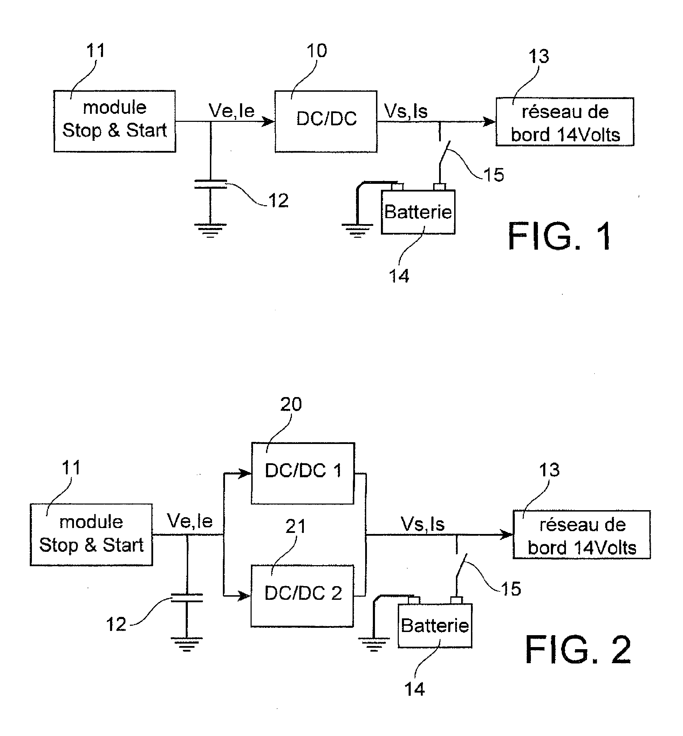

Il existe de plus une réalisation comprenant des ultra-condensateurs permettant de récupérer l'énergie cinétique au freinage et d'assister le moteur thermique en cas de besoin. Ainsi, comme illustré sur la figure 1, dans un mode de réalisation de l'art connu, un convertisseur DC/DC 10 est relié en entrée à un module Stop-Start 11 et à un module de stockage d'énergie 12, à base d'ultra-condensateurs, et en sortie au réseau de bord 14 Volts 13, et à une batterie 14 via un interrupteur 15. Une telle solution dispose d'une puissance doublée par sa capacité à gérer des tensions électriques supérieures. Lors des phases de ralentissement du véhicule, elle agit comme un frein électrique sur le moteur thermique et transforme l'énergie ainsi récupérée en électricité qui est stockée dans des ultra-condensateurs 12 adaptés à des cycles fréquents de chargement/déchargement. Cette électricité peut être restituée au réseau de bord 14 Volts 13 par l'intermédiaire du convertisseur DC/DC 10 ou réutilisée par l'alterno-démarreur du module Stop-Start 11 afin de relancer le moteur thermique lors de la fonction Stop - Start, ou lui venir en aide lors d'une forte demande de puissance. Elle permet de diminuer de manière sensible la consommation du moteur thermique, le gain obtenu étant estimé comme situé entre 10 et 12% en cycle européen NEDC.

Le convertisseur DC/DC 10 gère ainsi les échanges d'énergie entre un réseau flottant par exemple de tension nominale 24 Volts et le réseau véhicule 14 Volts. Mais ce convertisseur DC/DC 10 est prévu pour une puissance de 2,4 kW. Il ne permet pas de répondre à des besoins en puissance compris entre 2,4 kW et 4,8 kW apparus pour de nouveaux types de véhicule en développement.

L'invention a pour objet de proposer une solution permettant de répondre à de tels besoins, dans un cas où les contraintes de temps de développement ne permettent pas de prévoir une conception nouvelle du convertisseur DC/DC.

**EXPOSÉ DE L'INVENTION**

La présente invention concerne un dispositif de conversion DC/DC dans le réseau de bord d'un véhicule caractérisé en ce qu'il comprend au moins deux convertisseurs DC/DC identiques d'un point de vue matériel et logiciel disposés en parallèle reliés à un superviseur par un système de communication, avec des câblages symétriques en entrée et en sortie.

Par exemple, le dispositif est relié d'une part à un module Stop-Start comprenant un alterno-démarreur et à un ensemble de supercapacités et d'autre part au réseau de bord 14 volts du véhicule et à une batterie.

Avantageusement dans le dispositif de l'invention, chaque convertisseur comprend un module logiciel recevant du superviseur via un bus CAN un ordre de conversion marche/arrêt, une consigne de tension, une consigne de courant maximum à débiter et des signaux de mesure de tension et de courant, suivi d'un module matériel qui comprend deux modules de moyennage, suivi l'un d'une boucle de commande de tension et l'autre d'une boucle de commande de courant, reliées à un module de calcul de consigne suivi d'une alimentation à découpage, et dans lequel le module logiciel comprend un correcteur de tension et un correcteur de courant.

Par exemple, le dispositif comprend deux convertisseurs DC/DC.

Dans un premier mode de réalisation, le dispositif de l'invention comprend un superviseur maître et deux convertisseurs esclaves. Dans un premier sous-mode de réalisation le dispositif comprend, par exemple dans le superviseur, les modules suivants :

- un module d'équilibrage du courant en fonction de la température, relié :
- à un module d'évaluation de la valeur delta U = f (delta I), c'est-à-dire la valeur d'une compensation à appliquer à un convertisseur, ladite valeur étant fonction de la différence entre les courants de sortie des convertisseurs
- à un module d'évaluation de la tension cherchée U target, c'est-à-dire d'une consigne de tension, pour chacun des convertisseurs, qui reçoit une valeur initiale de U target, c'est-à-dire de ladite consigne de tension, délivrée par un module de calcul et la valeur delta U délivrée par le module d'évaluation de celle-ci, et dans lequel on utilise l'algorithme suivant :

```
if « Boost » DC/DC 1
(U_target_2 = U_tar_init
    AND
U_target_1 = U_tar_init
+delta_U)
else if « Boost » DC/DC 2
(U_target_1 = U_tar_init
    AND
U_target_2 = U_tar_init
+delta_U)
```

Avantageusement il comprend des moyens d'application d'un offset de tension à la consigne de tension du convertisseur DC/DC fournissant le moins de courant. Dans un second sous-mode de réalisation, le dispositif comprend, par exemple dans le superviseur, les modules suivants :

- un module d'équilibrage du courant en fonction de la température, relié :
- à un module d'évaluation de la valeur delta U = f (delta I), c'est-à-dire la valeur d'une compensation à appliquer à un convertisseur, ladite valeur étant fonction de la différence entre les températures des convertisseurs
- à un module d'évaluation de la tension cherchée U target, c'est-à-dire d'une consigne de tension, pour chacun des convertisseurs, qui reçoit une valeur initiale de U target, c'est-à-dire de ladite consigne de tension, délivrée par un module de calcul et une valeur delta U délivrée par le module d'évaluation de celle-ci, et dans lequel on utilise l'algorithme suivant :

```
if « Boost » DC/DC 1
(U_target_2 = U_tar_init
    AND
U_target_1 = U_tar_init
+delta_U)
else if « Boost » DC/DC 2
(U_target_1 = U_tar_init
    AND
U_target_2 = U_tar_init
+delta_U)
```

Avantageusement il comprend des moyens pour inhiber l'équilibre en courant et « booster » le convertisseur DC/DC le plus froid.

Dans un second mode de réalisation le dispositif de l'invention comprend un superviseur maître et deux convertisseurs DC/DC recevant de celui-ci une consigne de tension commune, et communiquant entre eux. Par exemple, les échanges entre le superviseur et les convertisseurs comprennent l'adaptation de la consigne de tension entrant dans le convertisseur DC/DC fournissant le moins de courant.

Dans un troisième mode de réalisation le dispositif de l'invention comprend un superviseur maître et un premier convertisseur DC/DC maître qui régule en tension et un second convertisseur esclave, dont la boucle de régulation en tension est inhibée, ce second convertisseur recevant une consigne de courant du convertisseur DC/DC maître et lui renvoyant le courant qu'il débite et sa température.

Avantageusement le dispositif de l'invention comprend des moyens de traitement des modes dégradés, et des moyens de redondance des diagnostics.

La présente invention concerne également un procédé de conversion DC/DC dans le réseau de bord d'un véhicule mettant en oeuvre le dispositif décrit ci-dessus qui comprend les étapes suivantes :

- une étape de réception par chaque convertisseur, en provenance d'une unité de commande ou superviseur, d'une consigne de tension, par exemple via un système de communication et
- une étape d'envoi, par exemple par chaque convertisseur, d'informations internes concernant le courant et la température interne, et
- une étape de modification de la consigne de tension appliquée à au moins un convertisseur DC/DC en fonction des différences de température.

Avantageusement le procédé de l'invention comprend une étape d'application d'un offset de tension à la consigne de tension du convertisseur DC/DC fournissant le moins de courant.

Avantageusement le procédé de l'invention comprend une étape d'inhibition de l'équilibre en courant et dans laquelle on booste le convertisseur DC/DC le plus froid.

Avantageusement, le procédé de l'invention comprend une étape dans laquelle chaque convertisseur reçoit du superviseur une consigne de tension distincte et lui renvoie des informations internes concernant le courant qu'il fournit et sa température interne.

Avantageusement le procédé de l'invention comprend une étape de réception par chaque convertisseur DC/DC d'une consigne de tension commune en provenance du superviseur, et une étape de communication entre eux, avec adaptation de la consigne de tension entrant dans le convertisseur DC/DC fournissant le moins de courant.

Avantageusement le procédé de l'invention comprend une étape d'émission d'une consigne de tension du superviseur vers un convertisseur maître, une étape d'émission d'une consigne de courant du convertisseur DC/DC maître vers un convertisseur esclave et une étape de renvoi par celui-ci du courant qu'il débite et de sa température.

**BRÈVE DESCRIPTION DES DESSINS**

La figure 1 illustre un dispositif de l'art antérieur.

Les figures 2 et 3 illustrent le dispositif de l'invention.

La figure 4 illustre la répartition en courant entre deux convertisseurs DC/DC disposés en parallèle. La figure 5 illustre les mesures de températures correspondantes.

La figure 6 représente un diagramme de Pareto proposant le rapport durée de vie sur différences de températures ($\Delta$T°C) entre deux convertisseurs DC/DC disposés en parallèle.

La figure 7 illustre le synoptique de régulation de tension courant d'un convertisseur DC/DC.

La figure 8 illustre le principe de la régulation logiciel d'un convertisseur DC/DC.

La figure 9 illustre un premier mode de réalisation du dispositif de l'invention.

Les figures 10 et 11 illustrent respectivement une commande sans stratégie d'équilibrage thermique et avec stratégie d'équilibrage thermique selon l'invention.

La figure 12 illustre la criticité du déséquilibre thermique en fonction de la différence de température $\Delta$T°C existant entre deux convertisseurs disposés en parallèle.

La figure 13 illustre un exemple d'équilibrage en courant dans un premier sous-mode de réalisation du dispositif de l'invention.

Les figures 14A et 14B illustrent deux exemples de compensation de Delta U ($\Delta$U) en fonction de Delta I ($\Delta$I).

La figure 15 illustre la mise en oeuvre de la compensation de la figure 14B dans le superviseur, dans le premier sous-mode de réalisation du dispositif de l'invention.

La figure 16 illustre un exemple d'équilibrage thermique dans un second sous-mode de réalisation du dispositif de l'invention.

Les figures 17A, 17B et 17C illustrent des exemples de compensation de Delta U ($\Delta$U) en fonction de Delta T°C ($\Delta$T°C).

La figure 18 illustre la mise en oeuvre de la compensation de la figure 17B dans le superviseur, dans le second sous-mode de réalisation du dispositif de l'invention.

Les figures 19 et 20 illustrent un second mode de réalisation du dispositif de l'invention.

La figure 21 illustre le principe de la régulation logiciel d'un convertisseur DC/DC dans un troisième mode de réalisation du dispositif de l'invention.

La figure 22 illustre le principe de l'équilibrage thermique dans le troisième mode de réalisation du dispositif de l'invention.

## EXPOSÉ DÉTAILLÉ DE MODES DE RÉALISATION PARTICULIERS

Dans le dispositif de l'invention, comme illustré sur la figure 2, on considère une architecture de puissance prévoyant la mise en parallèle d'au moins deux convertisseurs DC/DC (par exemple 12V/24V) 20 et 21. Dans cette figure 2, on reprend les références déjà utilisées sur la figure 1.

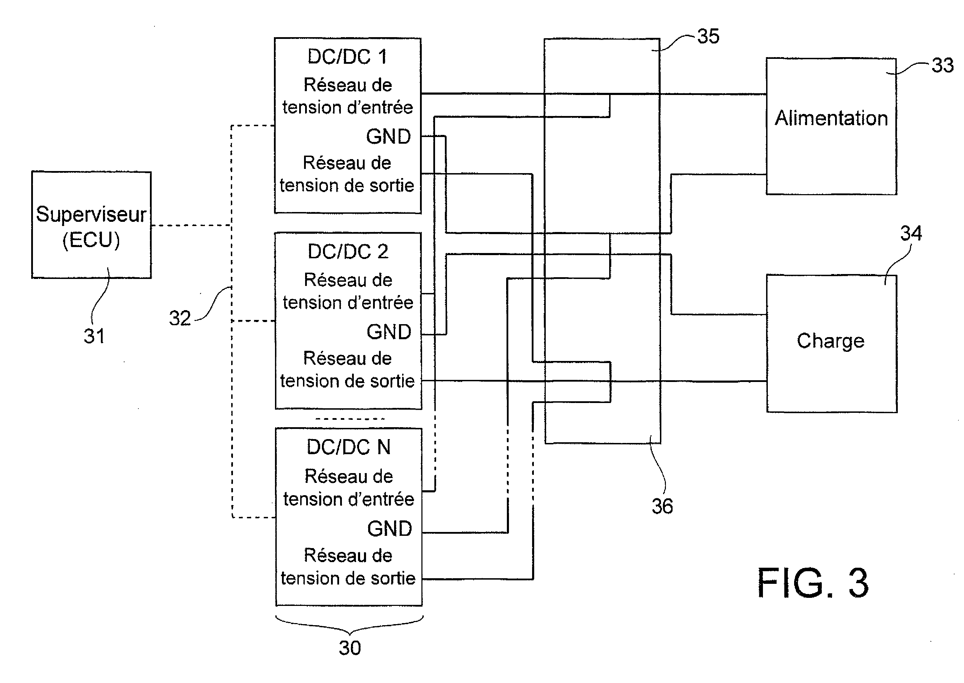

La figure 3 illustre le schéma électrique du câblage de plusieurs convertisseurs DC/DC disposés en parallèle. Ces convertisseurs 30 sont reliés d'une part à un superviseur (ECU) 31 par l'intermédiaire d'un bus CAN 32, par exemple, et d'autre part à une alimentation 33 et à une charge 34 via des modules de câblage 35 et 36.

Lors d'une telle mise en parallèle de plusieurs convertisseurs DC/DC élévateurs ou abaisseurs de tension recevant la même consigne et régulant en tension, le courant fourni par chaque convertisseur DC/DC dépend de l'impédance des câbles en sortie.

Dans le cas où les contraintes de tenue en tension nécessitent une précision telle qu'il n'est pas possible de limiter le courant dans l'un ou l'autre des convertisseurs sans risquer d'écrouler la tension ou de déréguler sans une stratégie d'équilibrage des courants interne au superviseur ou à chaque convertisseur DC/DC, on ne peut assurer un équilibre des courants fournis par les différents convertisseurs.

Dans l'hypothèse d'un refroidissement identique pour chacun des convertisseurs DC/DC disposés en parallèle, un déséquilibre en courant se traduit par un déséquilibre thermique entre chaque convertisseur. Sachant que le positionnement de ces convertisseurs, leur environnement thermique et leur mode de refroidissement ne sont pas connus et ont très peu de chance d'être identiques, il est donc nécessaire de prévoir une stratégie de commande de ces convertisseurs.

Dans la suite, pour simplifier la description, on considère à titre d'exemple non limitatif un ensemble de deux convertisseurs DC/DC1 et DC/DC2 en parallèle et des moyens de communication de ces convertisseurs entre eux, et avec un superviseur (ECU) à l'aide de bus CAN.

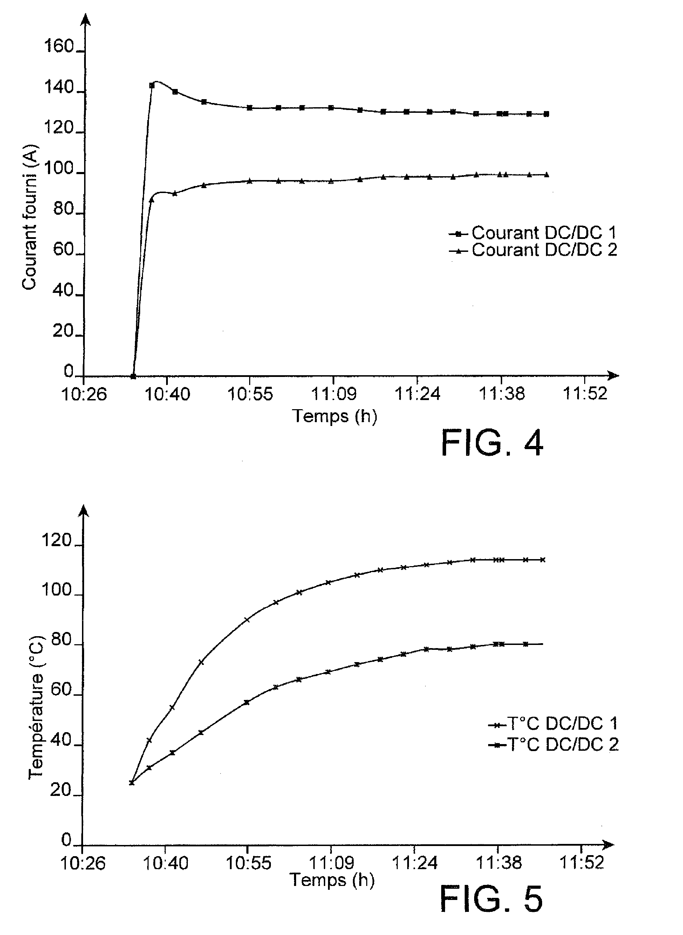

Les courbes illustrées sur les figures 4 et 5 présentent les écarts de température mesurés en fonction des déséquilibres en courant entre le premier et le second convertisseur DC/DC (DC/DC1 et DC/DC2) refroidis de manière identique. En fonction du temps, chaque écart de courant d'un ampère correspond à une différence de température d'un degré Celsius environ. Or, la différence (ou delta) de température entre ces deux convertisseurs, lors de leurs cycles de vie, influence fortement leurs durées de vie respectives.

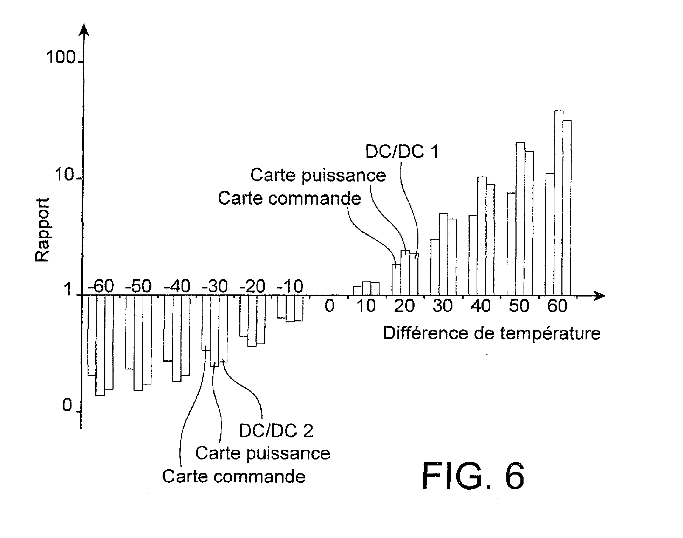

Le diagramme de Pareto illustré sur la figure 6 évalue les durées de vie de ces deux convertisseurs en fonction de leurs différences de température (successivement pour la carte de commande, la carte de puissance et le convertisseur complet). On déduit de ce diagramme que la durée de vie du premier convertisseur DC/DC1 fonctionnant à des températures en moyenne 30°C supérieures à celles du second convertisseur DC/DC2 est environ cinq fois plus courte. Les contraintes de fonctionnement de tels convertisseurs DC/DC disposés en parallèle doivent donc inclure des algorithmes visant à assurer leur équilibre thermique afin d'optimiser et d'harmoniser leur durée de vie.

Pour réaliser un tel équilibrage thermique des deux convertisseurs DC/DC, la solution de l'invention consiste à définir une stratégie de gestion de la répartition des courants respectifs de ces deux convertisseurs DC/DC en fonction de leur température interne, en sachant que la température d'un convertisseur est directement liée au courant qu'il fournit. L'objectif recherché est d'atteindre une différence de température qui soit inférieure à une valeur déterminée, par exemple 10°C.

Dans le dispositif de l'invention on considère deux convertisseurs DC/DC (DC/DC1 et DC/DC2) identiques d'un point de vue matériel et logiciel reliés à un système de communication, par exemple un bus CAN (« Controller Area Network ») privé ou public, et commandés par un superviseur (ECU) externe. Un détrompage permet de définir la configuration de chaque convertisseur : ils ont donc deux identifiants différents après reconnaissance du détrompage et sont différenciés sur le réseau de communication. Ils sont commandés via deux trames différentes.

Chaque convertisseur DC/DC1 et DC/DC2 reçoit les consignes suivantes :

* un ordre de conversion ON/OF (marche/arrêt),
* une consigne de tension U_target,
* une consigne de courant maximum à débiter I_max_target.

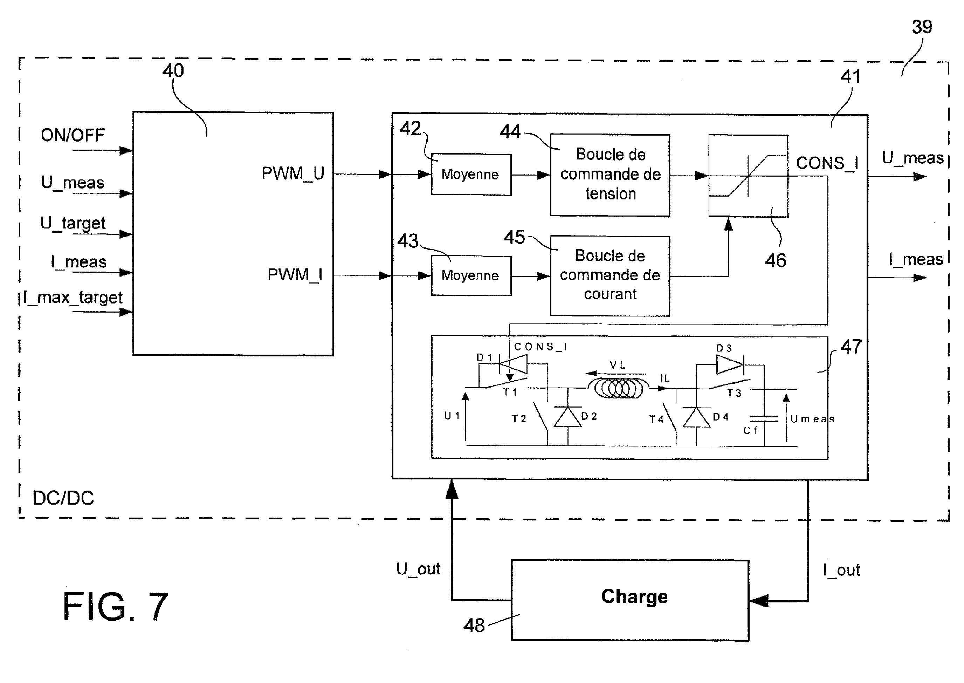

Le synoptique de l'interface matériel/logiciel d'un convertisseur DC/DC 39, relié à une charge 48, est illustré sur la figure 7. Un module logiciel 40 reçoit les consignes ON/OFF, U_target, I_max_target et les signaux de mesure de tension U_meas et de courant I_meas, et délivre des signaux de modulation à largeur d'impulsion PWM_U et PWM_I. Un module matériel 41, qui reçoit ces signaux PWM_U et PWM_I, comprend deux modules de moyennage 42 et 43, suivis l'un d'une boucle de commande de tension 44 et l'autre d'une boucle de commande de courant 45, reliées à un module de calcul de consigne 46 suivi d'une alimentation à découpage 47.

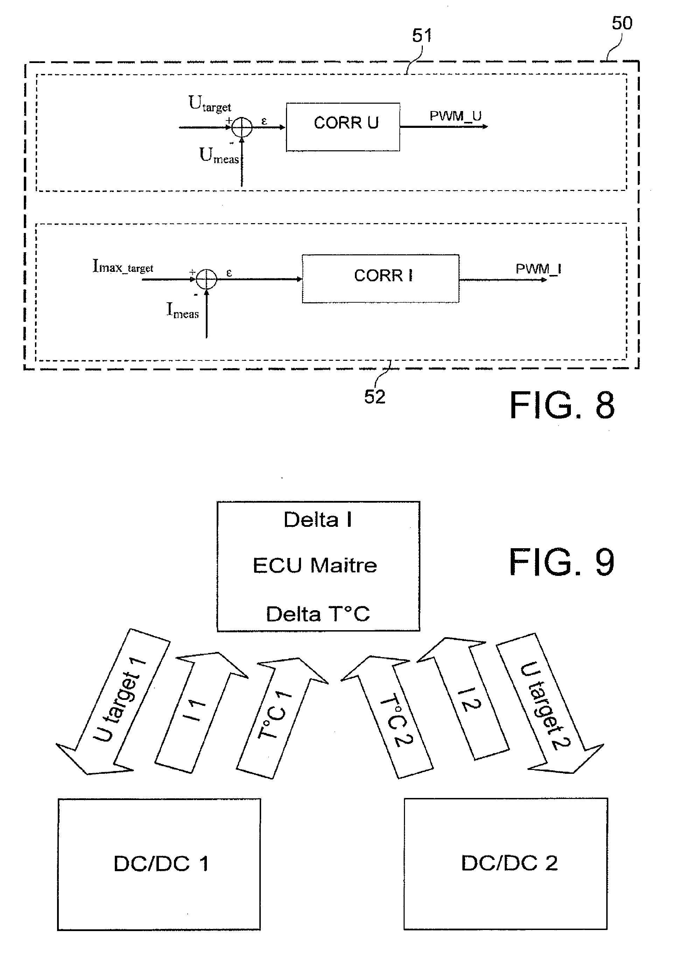

La figure 8 illustre le principe de régulation du module logiciel 50 d'un convertisseur DC/DC. Un correcteur de tension logiciel 51 reçoit un signal différence $U_{target}$ - $U_{meas}$ et délivre le signal PWM_U. Un correcteur de courant logiciel 52 reçoit un signal différence I$_{max\_target}$-Imeas et délivre le signal PWM_I. Si l'on régule en tension, c'est-à-dire qu'aucune limitation de courant n'est appliquée, le signal PWM_I est égal à 100% et c'est le signal PWM_U qui régule la tension de sortie.

Dans la suite l'ensemble des stratégies se place dans le cas d'un équilibrage en courant, aucune limitation de courant n'étant appliquée : I_max_target > Imeas.

Autrement dit, dans les exemples suivants le courant d'un convertisseur reste inférieur à la consigne de courant maximum à débiter I_max_target.

1. Premier mode de réalisation du dispositif de l'invention : Equilibrage thermique mis en oeuvre dans le superviseur

Dans ce premier mode de réalisation, l'équilibrage thermique est réalisé dans le superviseur (ECU), qui est donc « maître ». La figure 9 illustre les échanges d'informations (courants I1, I2, et températures T°C1 et T°C2 mesurées) et de consignes (U_target1 et U_target2) réalisés alors.

Les convertisseurs DC/DC1 et DC/DC2 sont totalement esclaves du superviseur (stratégie « double-esclave »). L'intelligence est mise en oeuvre dans celui-ci : la répartition du courant est gérée par une modification des consignes de tension (U_target1 et U_target2), des consignes de tension différentes étant alors appliquées aux deux convertisseurs DC/DC1 et DC/DC2. Chaque convertisseur reçoit une consigne de tension distincte et renvoie des informations internes concernant le courant qu'il fournit (I1, I2) et sa température interne (T°C1, T°C2).

Un traitement des modes dégradés (fonctionnement à X% de la puissance totale) et une redondance des diagnostics sont alors possibles en réalisant un traitement des informations entre les deux convertisseurs DC/DC et l'ECU maître.

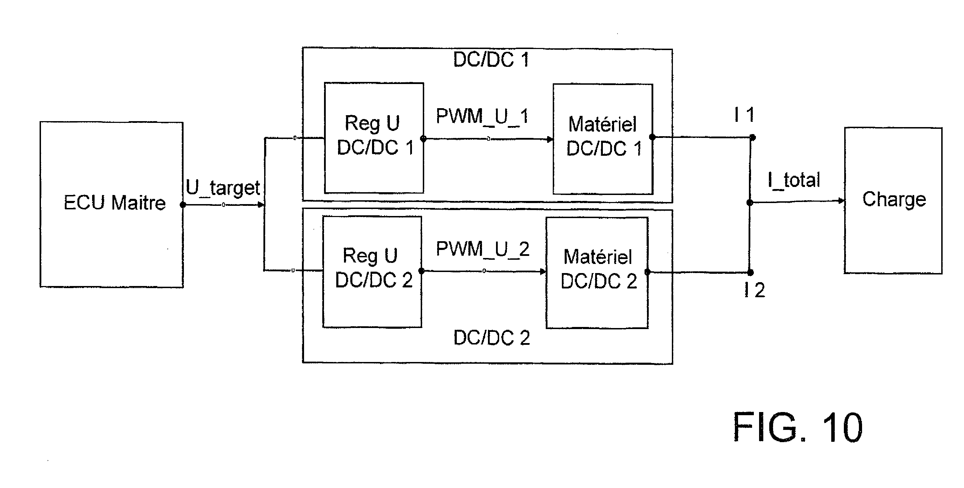

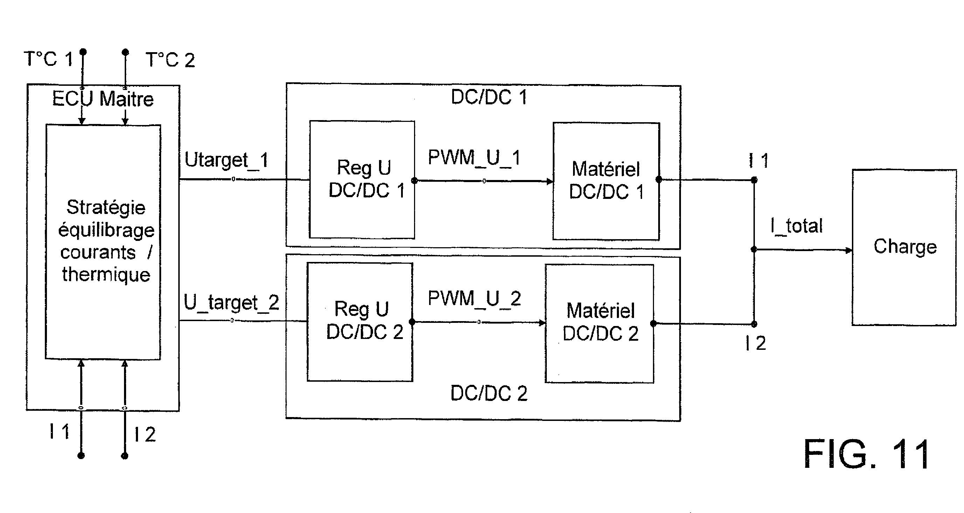

Les figures 10 et 11 permettent de mettre en évidence les caractéristiques de ce mode de réalisation au vu d'une commande de deux convertisseurs DC/DC en parallèle respectivement sans et avec stratégie d'équilibrage thermique. En absence d'équilibrage thermique, comme illustré sur la figure 10, les courants I1 et I2 (Itotal = I1 + I2) dépendent des différences de longueur de câbles entre chaque convertisseur DC/DC1 et DC/DC2 et la charge. Une dissymétrie du câblage entraîne automatiquement un déséquilibre en courant. Pour éviter un tel déséquilibre, comme illustré sur la figure 11, une stratégie d'équilibrage thermique est réalisée dans l'ECU maître.

On réalise les stratégies d'équilibrage en courant et d'équilibrage thermique, en appliquant des boucles d'algorithmes de calcul « lent » de la consigne à appliquer à chaque convertisseur DC/DC, de l'ordre de la seconde pour l'équilibrage en courant et de l'ordre de la minute pour l'équilibrage thermique.

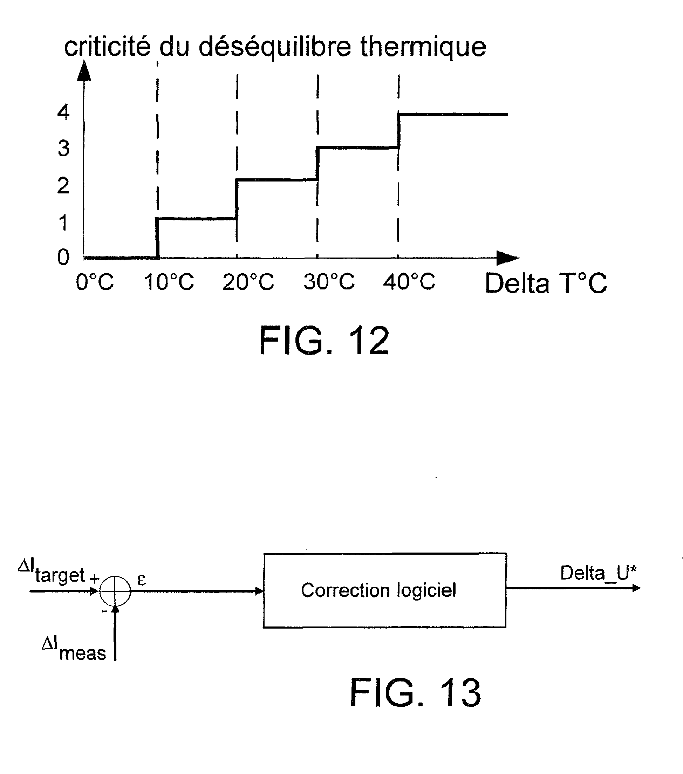

On définit alors des plages de différence de température. Si les deux convertisseurs DC/DC sont refroidis de la même façon, c'est-à-dire qu'ils se trouvent dans des plages de températures proches, seul un équilibrage des courants est nécessaire. Si l'un des convertisseurs DC/DC est moins refroidi ou dans une configuration telle qu'il chauffe plus, par exemple à cause de son emplacement près d'une source de chaleur, on veille à ce que le convertisseur le plus froid fournisse le plus de courant. Différentes zones critiques de déséquilibre thermique peuvent être définies en fonction des différences de températures, comme illustré sur la figure 12 :

- [0-10]°C : Zone 1
- [10-20]T°C : Zone 2
- [20-30]T°C : Zone 3
- [30-40]°C : Zone 4
- [supérieur à 40 ]°C : Zone 5

La figure 12 présente en abscisse la différence delta T (°C) entre les deux convertisseurs et en ordonnée la criticité correspondant à ce déséquilibre thermique.

a) Premier sous-mode de réalisation

Dans la zone 1, on peut ne gérer que l'équilibrage en courant qui est défini de la manière illustrée sur la figure 13. On applique alors un offset (ou compensation) de tension Delta_U* (ou ΔU*) à la consigne de tension Delta_U (ou ΔU) du convertisseur fournissant le moins de courant. Cet offset est calculé par un correcteur lent qui fait converger le delta I mesuré (ΔI$_{meas}$) avec le delta I cherché (ΔI$_{target}$).

Dans la zone 1, on cherche à obtenir des courants de sortie I1, I2 sensiblement égaux entre les convertisseurs DC/DC. La différence delta I entre les courants I1, I2 délivrés par les deux convertisseurs DC/DC a une valeur de consigne ΔI$_{target}$ (delta I cherché) qui est égale à zéro.

Afin de réduire l'erreur statique, le correcteur est au préalable compensé par un offset de compensation en tension Delta U qui est soit proportionnel (gain G) à la différence de courant Delta I, ou qui dépend d'une table de points d'appui définis après caractérisation de la mise en parallèle des convertisseurs :

EP 2 655 123 B1

$$\text{Delta U (compensation) = f (Delta I)}$$

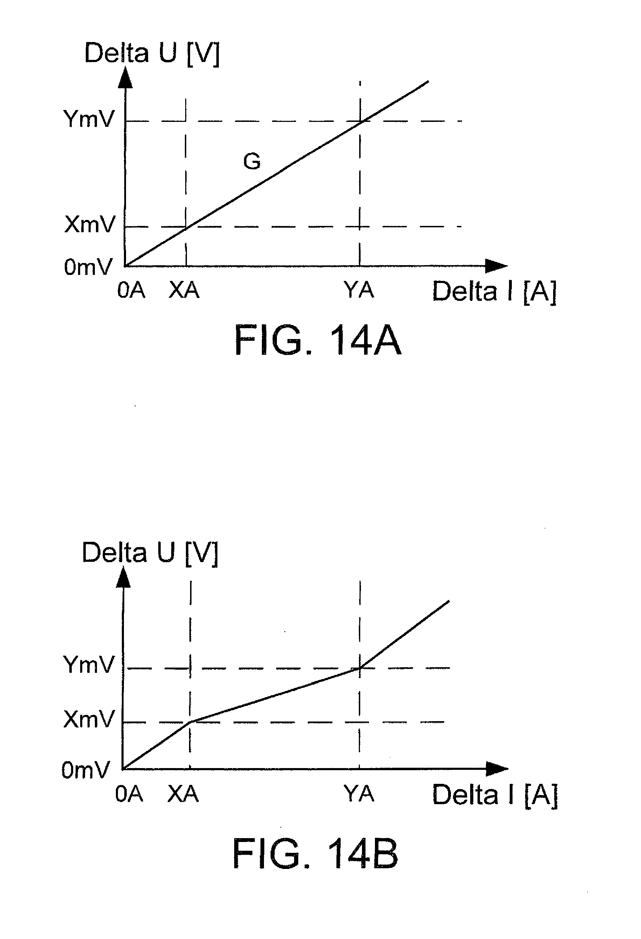

Les figures 14A et 14B donnent deux exemples d'une telle compensation, qui est mise en oeuvre dans le superviseur maître. Sur ces figures on peut avoir, à titre d'exemple, Xmv = 40 mV, Ymv = 200 mV, XA = 10 A et YA = 50 A.

La figure 14A présente un exemple dans lequel l'offset de compensation en tension Delta U est proportionnel à la différence de courant delta I. La figure 14B présente un exemple de table de points d'appui (« lookup table » en anglais) consistant en une cartographie qui, à une différence de courant delta I, associe un offset de compensation Delta U à appliquer au convertisseur.

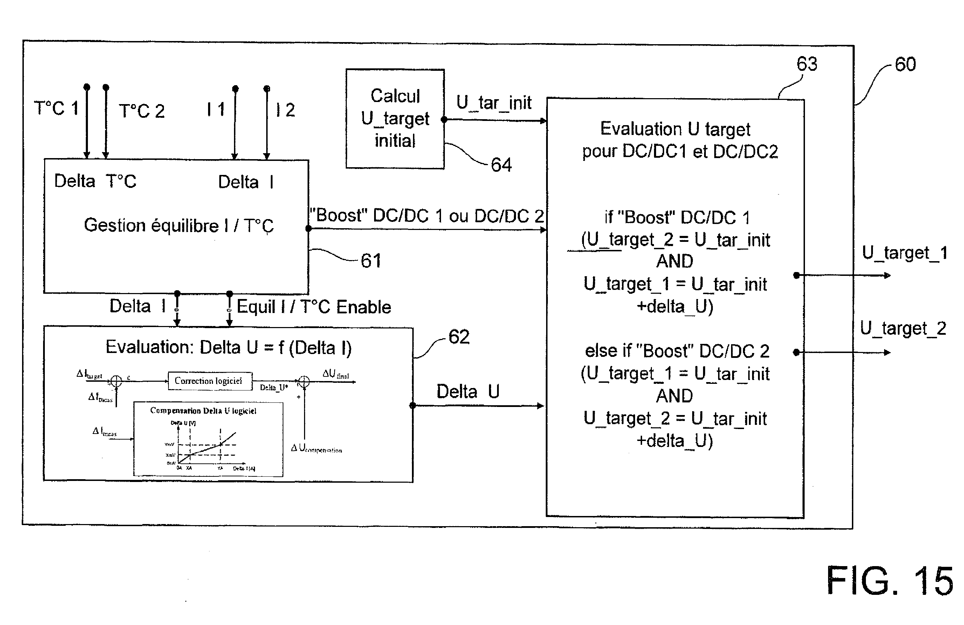

Le superviseur, ou ECU, maître 60 dans lequel est mise en oeuvre la compensation de la figure 14B, comme illustré sur la figure 15 comprend les modules suivants :

- un module 61 d'équilibrage du courant en fonction de la température, relié :
- à un module 62 d'évaluation de la valeur delta U = f (delta I),
- à un module 63 d'évaluation de la tension cherchée (U target) pour chacun des convertisseurs, qui reçoit une valeur initiale de U target délivrée par un module de calcul 64, et la valeur delta U délivrée par le module 62, et dans lequel on utilise l'algorithme suivant :

```
if « Boost » DC/DC 1
(U_target_2 = U_tar_init
    AND
U_target_1 = U_tar_init
    +delta_U)
else if « Boost » DC/DC 2
(U_target_1 = U_tar_init
    AND
U_target_2 = U_tar_init
    +delta_U)
```

Autrement dit, lorsque le courant I1 délivré par le convertisseur DC/DC 1 est inférieur au courant I2 délivré par le convertisseur DC/DC 2, l'offset de compensation delta U est ajouté à la consigne de tension U_target_1 du convertisseur DC/DC 1. Lorsque le courant I2 délivré par le convertisseur DC/DC 2 est inférieur au courant I1 délivré par le convertisseur DC/DC 1, l'offset de compensation delta U est ajouté à la consigne de tension U_target_2 du convertisseur DC/DC 2.

On garde cependant une marge de manoeuvre pour ne jamais déséquilibrer le courant dans l'autre sens, ainsi on sature le delta U (ou $\Delta U$) par une valeur maximale calibrable après tests permettant d'empêcher l'apparition d'un tel phénomène. Il faut de plus remarquer que la compensation peut être fixée à 0 : $\Delta U comp = 0$.

Le superviseur 60 de la figure 15 peut également être mis en oeuvre avec la compensation de la figure 14A.

b) second sous-mode de réalisation

Si on entre alors dans la zone 2, on doit considérer la compensation de consigne de tension et appliquer la stratégie d'équilibrage thermique. On inhibe alors l'équilibrage en courant et on applique l'équilibrage thermique afin de « booster » le convertisseur le plus froid. Contrairement à la zone 1, dans la zone 2 on ne cherche plus à obtenir des courants I1, I2 égaux entre les convertisseurs DC/DC 1, DC/DC 2, mais on souhaite élever le courant de sortie du convertisseur qui présente la température la faible.

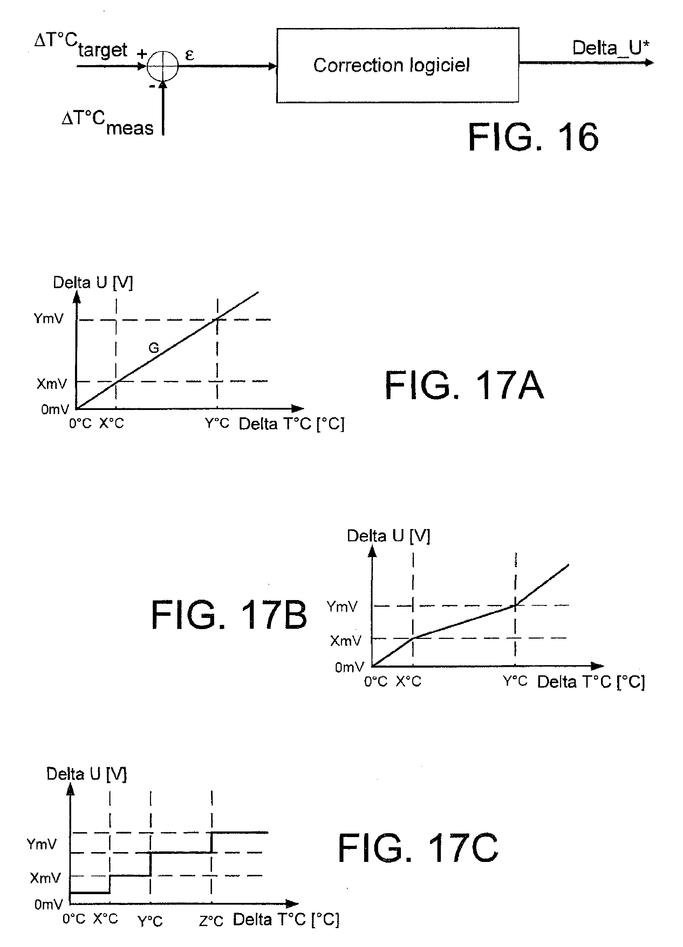

On applique un offset de tension Delta U à la consigne de tension de ce convertisseur, comme illustré sur la figure 16. Cet offset est calculé par un correcteur lent qui fait converger la différence de température mesurée entre les deux convertisseurs ($\Delta T°C_{meas}$) avec la différence de température cherchée ($\Delta T°C_{target}$).

Afin de réduire l'erreur statique, ce correcteur est également compensé au préalable par un offset de compensation ($\Delta U^*$) qui est soit proportionnel (gain G) à la différence de température ($\Delta T°C_{meas}$) ou dépend d'une table de points d'appuis définis après une caractérisation de la mise en parallèle des deux convertisseurs :

$$\text{Delta U*= f (|Delta T°C|)}$$

Les figures 17A, 17B et 17C illustrent trois exemples de compensation possibles.

Sur ces figures on peut avoir, à titre d'exemple, les mêmes valeurs Xmv, Ymv données précédemment.

La figure 17A présente un exemple dans lequel l'offset de compensation en tension Delta U est proportionnel à la différence de température delta T°C. Les figures 17B, 17C présentent un exemple de table de points d'appui (« lookup table » en anglais) consistant en une cartographie qui, à une différence de température delta T°C, associe un offset de compensation Delta U à appliquer au convertisseur.

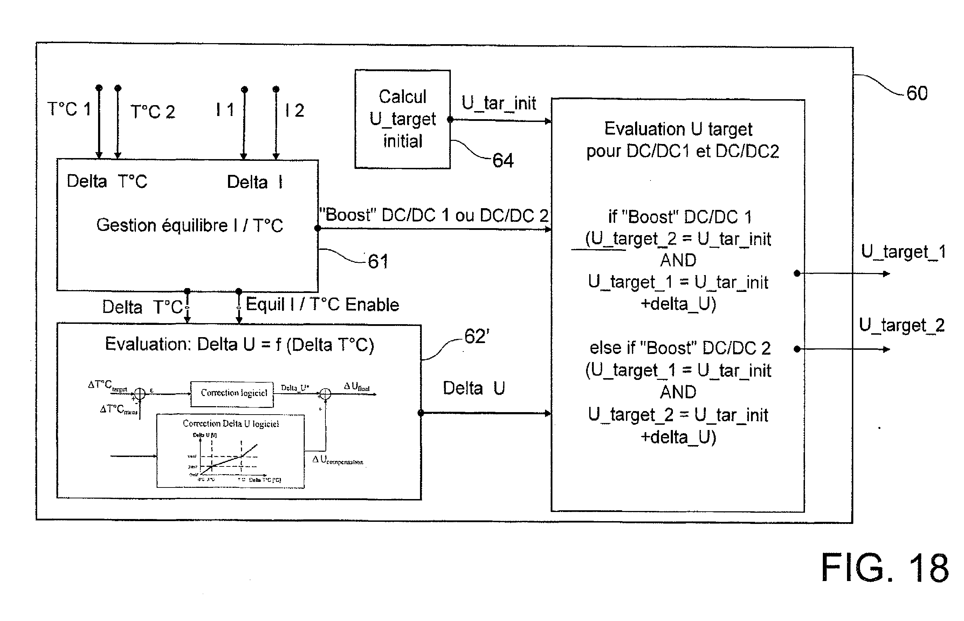

Comme illustré sur la figure 18, le superviseur comprend les modules suivants :

- un module 61 d'équilibrage du courant en fonction de la température, relié :
- à un module 62' d'évaluation de delta U = f (delta T°C),
- à un module 63 d'évaluation de la tension cherchée U target pour chacun des convertisseurs, qui reçoit une valeur initiale de U target délivrée par un module de calcul 64, et la valeur de delta U délivrée par le module 62 ; et dans lequel on utilise l'algorithme suivant :

```
if « Boost » DC/DC 1
 (U_target_2 = U_tar_init
     AND
U_target_1 = U_tar_init
+delta_U)
else if « Boost » DC/DC 2
 (U_target_1 = U_tar_init
     AND
U_target_2 = U_tar_init
+delta_U).
```

Autrement dit, lorsque la température T°C 1 du convertisseur DC/DC 1 est inférieure à celle T°C 2 du convertisseur DC/DC 2, l'offset de compensation delta U est ajouté à la consigne de tension U_target_1 du convertisseur DC/DC 1. Lorsque la température T°C 2 du convertisseur DC/DC 2 est inférieure à celle T°C 1 du convertisseur DC/DC 1, l'offset de compensation delta U est ajouté à la consigne de tension U_target_2 du convertisseur DC/DC 2.

Les sous-modes de réalisation peuvent être combinés. En particulier, lorsque la différence de température est inférieure ou égale à une valeur prédéterminée, par exemple est dans la zone 1 (dont un exemple a été précédemment donné), on applique le premier sous-mode. L'offset de compensation delta U est alors fonction de la différence de courant, par exemple comme représenté sur les figures 14A, 14B. Lorsque la différence de température est supérieure à la valeur prédéterminée, par exemple est dans les zones 2, 3, ou 4 (dont des exemples ont été précédemment donnés), on applique le deuxième sous-mode. L'offset de compensation delta U est alors fonction de la différence de température, par exemple comme représenté sur les figures 17A, 17B, 17C.

## 2. Second mode de réalisation du dispositif de l'invention équilibrage thermique mis en oeuvre dans les convertisseurs DC/DC

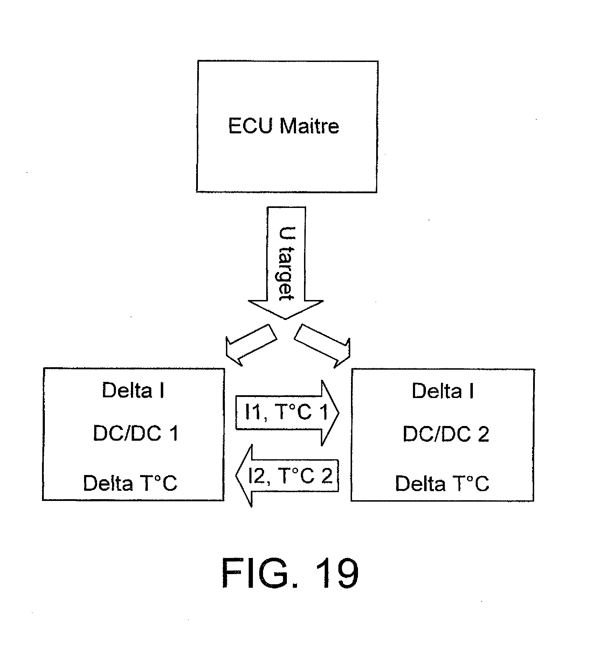

Comme illustré sur la figure 19, dans ce second mode de réalisation, la stratégie d'équilibrage courant/thermique est à présent mise en oeuvre dans les deux convertisseurs DC/DC. L'ECU maître ne gère pas l'équilibrage thermique des deux convertisseurs. Il envoie une consigne de tension unique U_target aux deux convertisseurs qui s'auto-équilibrent par la suite. La stratégie d'équilibrage thermique est mise en oeuvre de façon symétrique dans chaque convertisseur DC/DC. Mais l'adaptation de la consigne de tension ne se fait que dans le convertisseur qui fournit le moins de courant et que l'on doit « booster », c'est-à-dire augmenter le courant de sortie.

Un traitement des modes dégradés (fonctionnement à X% de la puissance totale) et une redondance des diagnostics sont également possibles par le traitement des informations transitant entre les convertisseurs DC/DC et l'ECU maître et entre les deux convertisseurs DC/DC.

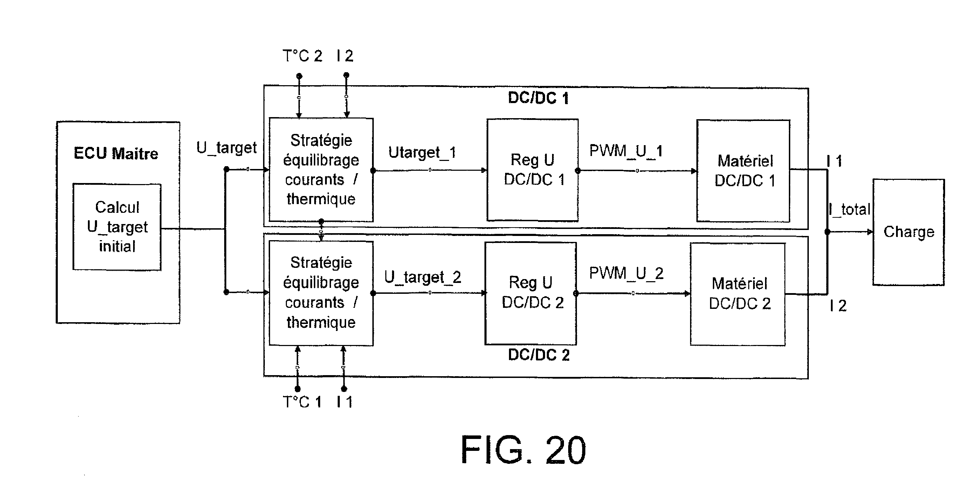

La figure 20 représente la mise en oeuvre de cette stratégie dans les convertisseurs DC/DC, le principe de stratégie équilibrage courant / équilibrage thermique est le même que celui décrit précédemment à la différence près que l'intelligence se trouve à présent dans chacun des deux convertisseurs DC/DC.

Le choix du convertisseur à « booster » est déterminé dans chacun des deux convertisseurs : seul un des deux convertisseurs autorise l'application de la stratégie et une modification de sa consigne de tension.

Une redondance de cette information est possible afin d'inhiber la stratégie d'équilibrage thermique sur les deux convertisseurs DC/DC en cas d'incohérence.

3. Troisième mode de réalisation du dispositif de l'invention fonctionnement maître/esclave

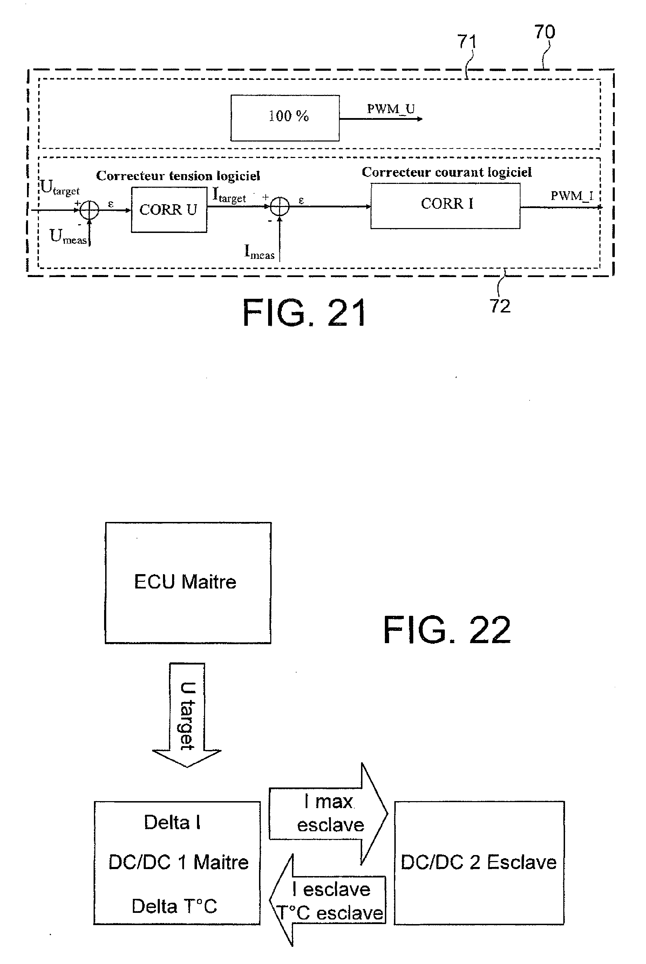

Dans ce mode de réalisation illustré sur la figure 21, on utilise un mode de régulation différent 70. La boucle de tension matériel 71 est inhibée (PWM_U = 100%). La régulation de la tension est à présent réalisée par le logiciel 72. Cette régulation est analogue à celle d'un moteur électrique avec double boucle imbriquée tension / courant. On régule la tension de sortie $U_{meas}$ et le courant débité $I_{meas}$ par le convertisseur DC/DC à l'aide du signal PWM_I, avec une consigne $U_{target}$ donnée par l'ECU maître et une consigne $I_{target}$ fournie par le correcteur de tension du convertisseur DC/DC maître:.

La figure 22 illustre le principe d'un équilibrage thermique avec utilisation d'une commande maître esclave. Les deux convertisseurs DC/DC sont en communication et sont commandés par un ECU maître sur un bus CAN privé ou public. Ils ont deux identifiants CAN différents :

- l'ECU maître commande le convertisseur DC/DC maître qui régule en tension.
- Le convertisseur DC/DC esclave est commandé comme une source de courant (on inhibe sa boucle de régulation de tension) et reçoit sa consigne de courant maximal du convertisseur DC/DC maître via le bus CAN. Il renvoie par bus CAN les informations concernant le courant qu'il débite et sa température.

La stratégie d'équilibrage courant/équilibrage thermique est mise en oeuvre dans les convertisseurs DC/DC : l'ECU maître n'envoie qu'une seule consigne de tension et ne limite pas les deux convertisseurs en courant. La stratégie d'équilibrage thermique est mise en oeuvre dans le convertisseur DC/DC maître, avec répartition du courant calculé par ce convertisseur maître qui module le courant à débiter par lui-même et par le convertisseur esclave en fonction des températures atteintes.

Pour des raisons de stabilité et de robustesse cette solution est retenue avantageusement dans le cas où la charge est une charge résistive en parallèle avec une batterie ou un module supercapacitif.

Bien évidemment, l'invention n'est pas limitée aux exemples décrits. Notamment, les deuxième et troisième modes de réalisation peuvent avoir des sous-modes de réalisation identiques à ceux du premier mode de réalisation.

**Revendications**

1. Dispositif de conversion DC/DC dans le réseau de bord d'un véhicule, **caractérisé en ce qu'**il comprend au moins deux convertisseurs DC/DC (20, 21) différenciés, identiques d'un point de vue matériel et logiciel disposés en parallèle reliés à un superviseur par un système de communication, avec des câblages symétriques en entrée et en sortie.

2. Dispositif selon la revendication 1, chaque convertisseur (30) comprenant un module logiciel (40) recevant d'un superviseur (31) via un bus CAN un ordre de conversion marche/arrêt (ON/OFF), une consigne de tension (U_target), une consigne de courant maximum (I_max_target) à débiter et des signaux de mesure de tension (U_meas) et de courant (I_meas), suivi d'un module matériel (41) qui comprend deux modules de moyennage (42 et 43), suivis l'un d'une boucle de commande de tension (44) et l'autre d'une boucle de commande de courant (45), reliées à un module de calcul de consigne (46) suivi d'une alimentation à découpage (47), et dans lequel le module logiciel (50) comprend un correcteur de tension (51) et un correcteur de courant (52).

3. Dispositif selon la revendication 1 ou 2, comprenant un superviseur maître et deux convertisseurs esclaves.

4. Dispositif selon la revendication 1 ou 2, qui comprend un superviseur maître et deux convertisseurs DC/DC recevant de celui-ci une consigne de tension commune et communiquant entre eux.

5. Dispositif selon la revendication 1 ou 2, qui comprend un superviseur maître, un premier convertisseur DC/DC maître recevant de celui-ci une consigne en tension, qui régule en tension et un second convertisseur DC/DC esclave, dont la boucle de régulation en tension est inhibée, ce second convertisseur recevant une consigne de courant du convertisseur DC/DC maître et lui renvoyant le courant qu'il débite et sa température.

6. Dispositif selon l'une des revendications précédentes, comprenant les modules suivants :

   - un module (61) d'équilibrage du courant en fonction de la température, relié :
   - à un module (62) d'évaluation de la valeur d'une compensation (delta U) à appliquer à un convertisseur, ladite valeur étant fonction de la différence (delta I) entre les courants de sortie (I1, I2) des convertisseurs

$$\text{delta U} = \text{f (delta I)},$$

- à un module (63) d'évaluation d'une consigne de tension (U_target_1, U_target_2) pour chacun des convertisseurs, qui reçoit une valeur initiale (U_tar_init) de ladite consigne de tension délivrée par un module de calcul (64), et la valeur (delta U) délivrée par le module d'évaluation (62) de celle-ci, et dans lequel on utilise l'algorithme suivant :

```
if « Boost » DC/DC 1
(U_target_2 = U_tar_init
    AND
U_target_1 = U_tar_init
    +delta_U)
else if « Boost » DC/DC 2
(U_target_1 = U_tar_init
    AND
U_target_2 = U_tar_init
    +delta_U).
```

**7.** Dispositif selon la revendication 6, qui comprend des moyens d'application d'un offset de tension (delta U) à la consigne de tension (U_target_1, U_target_2) du convertisseur DC/DC fournissant le moins de courant.

**8.** Dispositif selon l'une des revendications précédentes, comprenant les modules suivants :

- un module (61) d'équilibrage du courant en fonction de la température, relié :
- à un module (62') d'évaluation de la valeur d'une compensation (delta U) à appliquer à un convertisseur, ladite valeur étant fonction de la différence (delta T°C) entre les températures (T°C 1, T°C 2) des convertisseurs

$$\text{delta U} = \text{f (delta T°C)},$$

- à un module (63) d'évaluation d'une consigne de tension (U target_1, U_target_2) pour chacun des convertisseurs, qui reçoit une valeur initiale (U_tar_init) de ladite consigne de tension délivrée par un module de calcul (64) et la valeur (delta U) délivrée par le module d'évaluation (62) de celle-ci, et dans lequel on utilise l'algorithme suivant :

```
if « Boost » DC/DC 1
(U_target_2 = U_tar_init
    AND
U_target_1 = U_tar_init
    +delta_U)
else if « Boost » DC/DC 2
(U_target_1 = U_tar_init
    AND
U_target_2 = U_tar_init
    +delta_U).
```

**9.** Dispositif selon la revendication 8, qui comprend des moyens pour inhiber l'équilibre en courant et booster le convertisseur DC/DC le plus froid.

**10.** Dispositif selon l'une des revendications précédentes, qui comprend des moyens de traitement des modes dégradés.

**11.** Dispositif selon l'une des revendications précédentes, qui comprend des moyens de redondance des diagnostics.

**12.** Procédé de conversion DC/DC dans le réseau de bord d'un véhicule mettant en oeuvre le dispositif selon l'une des revendications précédentes, qui comprend les étapes suivantes :

- une étape de réception dans chaque convertisseur, en provenance d'un superviseur, d'une consigne de tension,
- une étape d'envoi par chaque convertisseur d'informations internes concernant le courant et la température interne, et
- une étape de modification de la consigne de tension appliquée à au moins un convertisseur DC/DC en fonction des différences de température.

13. Procédé selon la revendication 12, comprenant une étape d'application d'un offset de tension à la consigne de tension du convertisseur DC/DC fournissant le moins de courant.

14. Procédé selon la revendication 12, comprenant une étape d'inhibition de l'équilibre en courant et dans laquelle on booste le convertisseur DC/DC le plus froid.

15. Procédé selon l'une des revendications 12 à 14, comprenant une étape dans laquelle chaque convertisseur reçoit du superviseur une consigne de tension (U target_1, U_target_2) distincte et lui renvoie des informations internes concernant le courant qu'il fournit (I1, I2) et sa température interne (T°C1, T°C2).

16. Procédé selon l'une des revendications 12 à 14, comprenant une étape de réception par chaque convertisseur DC/DC en provenance du superviseur d'une consigne de tension commune (U_target), et une étape de communication entre eux, avec adaptation de la consigne de tension entrant dans le convertisseur DC/DC fournissant le moins de courant.

17. Procédé selon l'une des revendications 12 à 14, comprenant une étape d'émission d'une consigne de tension (U_target) du système vers un convertisseur maître, une étape d'émission d'une consigne de courant du convertisseur DC/DC maître vers un convertisseur esclave et une étape de renvoi par celui-ci du courant qu'il débite et de sa température.

**Patentansprüche**

1. DC/DC-Wandlervorrichtung im Bordnetz eines Fahrzeugs, **dadurch gekennzeichnet, dass** sie mindestens zwei DC/DC-Wandler (20, 21) enthält, die unterschiedlich, hinsichtlich der Hardware und Software gleich, parallel geschaltet, mit einem Supervisor durch ein Kommunikationssystem verbunden sind, mit symmetrischen Verkabelungen am Eingang und am Ausgang.

2. Vorrichtung nach Anspruch 1, wobei jeder Wandler (30) ein Softwaremodul (40) enthält, das von einem Supervisor (31) über einen CAN-Bus einen Ein/Aus-Umwandlungsbefehl (ON/OFF), einen Spannungssollwert (U_target), einen Sollwert eines zu liefernden maximalen Stroms (I_max_target) und Spannungs- (U_meas) und Strommesssignale (I_meas) empfängt, gefolgt von einem Hardwaremodul (41), das zwei Mittelungsmodule (42 und 43) enthält, das eine gefolgt von einem Spannungssteuerkreis (44) und das andere gefolgt von einem Stromsteuerkreis (45), die mit einem Sollwertberechnungsmodul (46) gefolgt von einem Schaltnetzteil (47) verbunden sind, und wobei das Softwaremodul (50) einen Spannungsregler (51) und einen Stromregler (52) enthält.

3. Vorrichtung nach Anspruch 1 oder 2, die einen Master-Supervisor und zwei Slave-Wandler enthält.

4. Vorrichtung nach Anspruch 1 oder 2, die einen Master-Supervisor und zwei DC/DC-Wandler enthält, die von diesem einen gemeinsamen Spannungssollwert empfangen und miteinander kommunizieren.

5. Vorrichtung nach Anspruch 1 oder 2, die einen Master-Supervisor, einen ersten Master-DC/DC-Wandler, der von diesem einen Spannungssollwert empfängt, der die Spannung regelt, und einen zweiten Slave-DC/DC-Wandler enthält, dessen Spannungsregelkreis gesperrt ist, wobei dieser zweite Wandler einen Stromsollwert vom Master-DC/DC-Wandler empfängt und den Strom, den er liefert, und seine Temperatur an ihn zurückschickt.

6. Vorrichtung nach einem der vorhergehenden Ansprüche, die die folgenden Module enthält:

- ein Modul (61) des Stromausgleichs abhängig von der Temperatur, das verbunden ist:
- mit einem Modul (62) zur Ermittlung des Werts einer an einen Wandler anzuwendenden Kompensation (delta U), wobei der Wert von der Differenz (delta I) zwischen den Ausgangsströmen (I1, I2) der Wandler abhängt

$$delta\ U\ =\ f\ (delta\ I),$$

- mit einem Modul (63) zur Ermittlung eines Spannungssollwerts (U_target_1, U_target_2) für jeden der Wandler, das einen Anfangswert (U_tar_init) des Spannungssollwerts, der von einem Rechenmodul (64) geliefert wird, und den von dessen Ermittlungsmodul (62) gelieferten Wert (delta U) empfängt, und wobei der folgende Algorithmus verwendet wird:

```
if « Boost » DC/DC 1
 (U_target_2 = U_tar_init
     AND
U_target_1 = U_tar_init
  +delta_U)
else if « Boost » DC/DC 2
 (U_target_1 = U_tar_init
     AND
U_target_2 = U_tar_init
  +delta_U).
```

7.  Vorrichtung nach Anspruch 6, die Einrichtungen zum Anwenden eines Spannungsoffsets (delta U) an den Spannungssollwert (U_target_1, U_target_2) des am wenigsten Strom liefernden DC/DC-Wandlers enthält.

8.  Vorrichtung nach einem der vorhergehenden Ansprüche, die die folgenden Module enthält:

    - ein Modul (61) zum Ausgleich des Stroms abhängig von der Temperatur, verbunden mit:
    - einem Modul (62') zur Ermittlung des Werts einer an einen Wandler anzuwendenden Kompensation (delta U), wobei der Wert von der Differenz (delta T°C) zwischen den Temperaturen (T°C 1, T°C 2) der Wandler abhängt

$$delta\ U\ =\ f\ (delta\ T°C),$$

    - einem Modul (63) zur Ermittlung eines Spannungssollwerts (U_target_1, U_target_2) für jeden der Wandler, das einen Anfangswert (U_tar_init) des Spannungssollwerts, der von einem Rechenmodul (64) geliefert wird, und den von dessen Ermittlungsmodul (62) gelieferten Wert (delta U) empfängt, und wobei der folgende Algorithmus verwendet wird:

```
if « Boost » DC/DC 1
 (U_target_2 = U_tar_init
     AND
U_target_1 = U_tar_init
   +delta_U)
else if « Boost » DC/DC 2
 (U_target_1 = U_tar_init
     AND
U_target_2 = U_tar_init
  +delta_U).
```

9.  Vorrichtung nach Anspruch 8, die Einrichtungen zum Sperren des Stromausgleichs und zum Boosten des kältesten DC/DC-Wandlers enthält.

10. Vorrichtung nach einem der vorhergehenden Ansprüche, die Verarbeitungseinrichtungen der Notbetriebe enthält.

11. Vorrichtung nach einem der vorhergehenden Ansprüche, die Redundanzeinrichtungen der Diagnosen enthält.

12. DC/DC-Umwandlungsverfahren im Bordnetz eines Fahrzeugs, das die Vorrichtung nach einem der vorhergehenden Ansprüche verwendet, das die folgenden Schritte enthält:

    - einen Schritt des Empfangens in jedem Wandler, von einem Supervisor kommend, eines Spannungssollwerts,
    - einen Schritt des Sendens durch jeden Wandler von internen Informationen, die den Strom und die innere Temperatur betreffen, und

- einen Schritt der Änderung des an mindestens einen DC/DC-Wandler angewendeten Spannungssollwerts abhängig von den Temperaturunterschieden.

13. Verfahren nach Anspruch 12, das einen Schritt des Anwendens eines Spannungsoffsets an den Spannungssollwert des DC/DC-Wandlers enthält, der den wenigsten Strom liefert.

14. Verfahren nach Anspruch 12, das einen Schritt des Sperrens des Stromausgleichs enthält, und in dem der kälteste DC/DC-Wandler geboostet wird.

15. Verfahren nach einem der Ansprüche 12 bis 14, das einen Schritt enthält, in dem jeder Wandler einen anderen Spannungssollwert (U_target_1, U_target_2) vom Supervisor empfängt und an ihn interne Informationen betreffend den von ihm gelieferten Strom (I1, I2) und seine innere Temperatur (T°C1, T°C2) zurückschickt.

16. Verfahren nach einem der Ansprüche 12 bis 14, das einen Schritt des Empfangens durch jeden DC/DC-Wandler eines vom Supervisor kommenden gemeinsamen Spannungssollwerts (U_target) und einen Schritt der Kommunikation zwischen ihnen enthält, mit Anpassung des in den den wenigsten Strom liefernden DC/DC-Wandler eingehenden Spannungssollwerts.

17. Verfahren nach einem der Ansprüche 12 bis 14, das einen Schritt des Sendens eines Spannungssollwerts (U_target) vom System zu einem Master-Wandler, einen Schritt des Sendens eines Stromsollwerts vom Master-DC/DC-Wandler an einen Slave-Wandler und einen Schritt des Rücksendens durch diesen des Stroms den er liefert und seiner Temperatur enthält.

## Claims

1. DC/DC conversion device in the on-board network of a vehicle, **characterized in that** it comprises at least two different DC/DC converters (20,21), identical from a hardware and software point of view arranged in parallel connected to a supervisor by a communication system, with symmetrical wiring at the input and at the output.

2. Device according to Claim 1, each converter (30) comprising a software module (40) receiving from a supervisor (31) via a CAN bus an on/off conversion order (ON/OFF), a voltage setpoint (U_target), a maximum flowing current setpoint (I_max_target) and voltage (U_meas) and current (I_meas) measurement signals, followed by a hardware module (41) which comprises two averaging modules (42 and 43), one followed by a voltage control loop (44) and the other by a current control loop (45), connected to a setpoint computation module (46) followed by a switch-mode power supply (47), and in which the software module (50) comprises a voltage corrector (51) and a current corrector (52).

3. Device according to Claim 1 or 2, comprising a master supervisor and two slave converters.

4. Device according to Claim 1 or 2, which comprises a master supervisor and two DC/DC converters receiving a common voltage setpoint therefrom and communicating amongst themselves.

5. Device according to Claim 1 or 2, which comprises a master supervisor, a first master DC/DC converter receiving a voltage setpoint therefrom, which regulates the voltage and a second slave DC/DC converter, whose voltage regulator loop is inhibited, this second converter receiving a current setpoint from the master DC/DC converter and returning to it the current flowing through it and its temperature.

6. Device according to one of the preceding claims, comprising the following modules:

- a module (61) for balancing the current as a function of the temperature, connected:
- to a module (62) for evaluating the value of a compensation (delta U) to be applied to a converter, said value being a function of the difference (delta I) between the output currents (I1, I2) of the converters

```
delta U = f(delta I),
```

- to a module (63) for evaluating a voltage setpoint (U_target_1, U_target_2) for each of the converters, which receives an initial value (U_tar_init) of said voltage setpoint issued by a computing module (64), and the value (delta U) issued by the module (62) for evaluating that value, and in which the following algorithm is used:

```
if "Boost" DC/DC 1
(U_target_2 = U_tar_init
   AND
U_target_1 = U_tar_init
   +delta_U)
else if "Boost" DC/DC 2
(U_target_1 = U_tar_init
   AND
U_target_2 = U_tar_init
   +delta_U).
```

7. Device according to Claim 6, which comprises means for applying a voltage offset (delta U) to the voltage setpoint (U_target_1, U_target_2) of the DC/DC converter supplying the least current.

8. Device according to one of the preceding claims, comprising the following modules:

    - a module (61) for balancing the current as a function of the temperature, connected:
    - to a module (62') for evaluating the value of a compensation (delta U) to be applied to a converter, said value being a function of the difference (delta T°C) between the temperatures (T°C 1, T°C 2) of the converters

$$delta\ U = f\ (delta\ T°C),$$

    - to a module (63) for evaluating a voltage setpoint (U_target_1, U_target_2) for each of the converters, which receives an initial value (U_tar_init) of said voltage setpoint issued by a computing module (64) and the value (delta U) issued by the module (62) for evaluating the latter, and in which the following algorithm is used:

```
if "Boost" DC/DC 1
(U_target_2 = U_tar_init
   AND
U_target_1 = U_tar_init
   +delta_U)
else if "Boost" DC/DC 2
(U_target_1 = U_tar_init
   AND
U_target_2 = U_tar_init
   +delta_U).
```

9. Device according to Claim 8, which comprises means for inhibiting the current balance and boosting the coolest DC/DC converter.

10. Device according to one of the preceding claims, which comprises means for processing the degraded modes.

11. Device according to one of the preceding claims, which comprises diagnostic redundancy means.

12. Method of DC/DC conversion in the on-board network of a vehicle implementing the device according to one of the preceding claims, which comprises the following steps:

    - a step of receiving a voltage setpoint in each converter, originating from a supervisor,
    - a step of sending internal information concerning the current and the internal temperature by each converter, and
    - a step of modifying the voltage setpoint applied to at least one DC/DC converter as a function of the temperature differences.

13. Method according to Claim 12, comprising a step of applying a voltage offset to the voltage setpoint of the DC/DC converter supplying the least current.

**14.** Method according to Claim 12, comprising a step of inhibiting the current balance and in which the coolest DC/DC converter is boosted.

**15.** Method according to one of Claims 12 to 14, comprising a step in which each converter receives from the supervisor a separate voltage setpoint (U target_1, U_target_2) and returns thereto internal information concerning the current that it supplies (I1,I2) and its internal temperature (T°C1, T°C2).

**16.** Method according to one of Claims 12 to 14, comprising a step of each DC/DC converter originating from the supervisor receiving a common voltage setpoint (U_target), and a step of communicating amongst themselves, with adaptation of the voltage setpoint input into the DC/DC converter supplying the least current.

**17.** Method according to one of Claims 12 to 14, comprising a step of transmitting a voltage setpoint (U_target) from the system to a master converter, a step of transmitting a current setpoint from the DC/DC master converter to a slave converter and a step of the latter returning the current flowing through it and its temperature.

11        10        13

| module Stop & Start | $V_e, I_e$ | DC/DC | $V_s, I_s$ | réseau de bord 14Volts |

12

15

Batterie

14

# FIG. 1

20

11

| module Stop & Start | $V_e, I_e$ | DC/DC 1 |
| | | 21 |
| | | DC/DC 2 |

$V_s, I_s$ → réseau de bord 14Volts   13

12

15

Batterie

14

# FIG. 2

FIG. 3

EP 2 655 123 B1

Superviseur (ECU)

31

32

30

DC/DC 1

Réseau de tension d'entrée

GND

Réseau de tension de sortie

DC/DC 2

Réseau de tension d'entrée

GND

Réseau de tension de sortie

DC/DC N

Réseau de tension d'entrée

GND

Réseau de tension de sortie

35

33

Alimentation

34

Charge

36

FIG. 4

FIG. 5

FIG. 6

39

40

41

ON/OFF

U_meas

U_target

I_meas

I_max_target

PWM_U

PWM_I

42

43

Moyenne

Moyenne

44

45

Boucle de
commande de
tension

Boucle de
commande de
courant

46

CONS_I

U_meas

I_meas

47

D 1    CONS_I

V L

D 3

T 1

U 1    T 2    D 2    T 4    D 4    Cf    Umeas

IL

T 3

DC/DC

U_out

I_out

Charge

48

FIG. 7

FIG. 8

FIG. 9

FIG. 10

EP 2 655 123 B1

FIG. 11

criticité du déséquilibre thermique

FIG. 12

FIG. 13

FIG. 14A

FIG. 14B

T°C 1   T°C 2   I 1   I 2

Calcul U_target initial ~64

U_tar_init

Delta T°C   Delta I

Gestion équilibre I / T°C ~61

"Boost" DC/DC 1 ou DC/DC 2

Delta I   Equil I / T°C Enable

Evaluation: Delta U = f (Delta I) ~62

$\Delta I_{target}$   $\varepsilon$   Correction logiciel   Delta_U*   $\Delta U_{final}$

$\Delta I_{meas}$

Compensation Delta U logiciel

$\Delta I_{meas}$

$\Delta U_{compensation}$

Delta U

63

Evaluation U target pour DC/DC1 et DC/DC2

if "Boost" DC/DC 1
(U_target_2 = U_tar_init
AND
U_target_1 = U_tar_init
+delta_U)

else if "Boost" DC/DC 2
(U_target_1 = U_tar_init
AND
U_target_2 = U_tar_init
+delta_U)

60

U_target_1

U_target_2

FIG. 15

EP 2 655 123 B1

$\Delta T°C_{target}$ + $\varepsilon$ → Correction logiciel → Delta_U*

$\Delta T°C_{meas}$ −

# FIG. 16

Delta U [V]

YmV

XmV

0mV

0°C X°C Y°C Delta T°C [°C]

G

# FIG. 17A

Delta U [V]

YmV

XmV

0mV

0°C X°C Y°C Delta T°C [°C]

# FIG. 17B

Delta U [V]

YmV

XmV

0mV

0°C X°C Y°C Z°C Delta T°C [°C]

# FIG. 17C

EP 2 655 123 B1

T°C 1    T°C 2       I 1    I 2

Calcul
U_target
initial

U_tar_init

~64

Delta  T°C          Delta  I

Gestion équilibre I / T°C

"Boost" DC/DC 1 ou DC/DC 2

~61

Delta  T°C          Equil I / T°C Enable

Evaluation: Delta U = f (Delta T°C)          ~62'

$\Delta T°C_{target}$  ε   Correction logiciel   Delta_U*   $\Delta U_{final}$

$\Delta T°C_{meas}$

Correction Delta U logiciel

Delta U [V]

$\Delta U_{compensation}$

T°C  Delta T°C [°C]

Delta  U

Evaluation U target
pour DC/DC1 et DC/DC2

if "Boost" DC/DC 1
(U_target_2 = U_tar_init
AND
U_target_1 = U_tar_init
+delta_U)

else if "Boost" DC/DC 2
(U_target_1 = U_tar_init
AND
U_target_2 = U_tar_init
+delta_U)

~60

U_target_1

U_target_2

FIG. 18

ECU Maitre

U target

Delta I

DC/DC 1

Delta T°C

I1, T°C 1

I2, T°C 2

Delta I

DC/DC 2

Delta T°C

# FIG. 19

FIG. 20

71    70

100 %    PWM_U

**Correcteur tension logiciel**    **Correcteur courant logiciel**

$U_{target}$

+    ε    CORR U    $I_{target}$    +    ε    CORR I    PWM_I

$U_{meas}$    -    -

$I_{meas}$

## FIG. 21

72

ECU Maitre

## FIG. 22

U target

Delta I

DC/DC 1 Maitre    I max esclave

Delta T°C    I esclave    DC/DC 2 Esclave

T°C esclave